## Europäisches Patentamt
## European Patent Office
## Office européen des brevets

(19)

(11) Veröffentlichungsnummer: **0 123 881**
**B1**

(12) **EUROPÄISCHE PATENTSCHRIFT**

(45) Veröffentlichungstag der Patentschrift:
**20.11.86**

(51) Int. Cl.⁴: **C 08 G 69/46**

(21) Anmeldenummer: **84103150.3**

(22) Anmeldetag: **22.03.84**

(54) **Verfahren zum kontinuierlichen Eindampfen von Caprolactam und dessen Oligomere enthaltenden wässrigen Lösungen.**

(30) Priorität: **28.03.83 DE 3311260**

(43) Veröffentlichungstag der Anmeldung:
**07.11.84 Patentblatt 84/45**

(45) Bekanntmachung des Hinweises auf die Patenterteilung:
**20.11.86 Patentblatt 86/47**

(84) Benannte Vertragsstaaten:
**BE CH DE IT LI NL**

(56) Entgegenhaltungen:
**DE - A - 1 495 654**
**DE - A - 2 135 085**
**DE - A - 2 501 348**
**DE - A - 2 732 328**

(73) Patentinhaber: **BASF Aktiengesellschaft,
Carl-Bosch-Strasse 38, D-6700 Ludwigshafen (DE)**

(72) Erfinder: **Wehr, Rudolf, Dr., Mandelring 15,
D-6706 Wachenheim (DE)**
Erfinder: **Weinfurter, Kurt, Littersheimer Weg 36,
D-6712 Bobenheim-Roxheim (DE)**

## Beschreibung

Bei der Extraktion von Polycaprolactam mit Wasser erhält man wässrige Lösungen, die Caprolactam und dessen Oligomere enthalten. Um die darin enthaltenden Wertstoffe wieder verwenden zu können, z.B. bei der Polymerisation von Caprolactam, werden diese Lösungen eingedampft. Ein solches Verfahren wird z.B. in der DE-AS 2 501 348 beschrieben. Hierbei werden die wässrigen Lösungen zunächst vorzugsweise mehrstufig, bis auf einen Gehalt von bis höchstens 70 Gew.-% aufkonzentriert und dann in einem zweiten Schritt in einem Dünnschicht- oder Fallfilmverdampfer bis auf einen Gehalt von grösser 90 Gew.-% aufkonzentriert, wobei man vor oder während der letzten Aufkonzentrierungsstufe mehr als die gleiche Menge an Caprolactam, bezogen auf den Feststoffgehalt des Konzentrats zusetzt. Es hat sich jedoch herausgestellt, dass der Zusatz von Caprolactam Verstopfung durch ausfallende Oligomere in der letzten Verdampferstufe nicht zu verhindern vermag. Zudem hat das Verfahren den Nachteil, dass in der ersten Aufkonzentrierungsstufe höchstens ein Feststoffgehalt von 70% erzielt wird und hierbei jedenfalls Verstopfungen durch ausfallende Oligomere nicht zu vermeiden sind.

Es war deshalb die technische Aufgabe gestellt, beim Eindampfen von Caprolactam und dessen Oligomere enthaltenden wässrigen Lösungen das Ausfallen von Oligomeren und damit verbundenes Verstopfen von Vorrichtungen zu vermeiden.

Diese technische Aufgabe wird gelöst in einem Verfahren zum Eindampfen von Caprolactam und dessen Oligomere enthaltenden wässrigen Lösungen, die bei der Extraktion von Polycaprolactam anfallen durch mehrstufiges Eindampfen unter Zusatz von Caprolactam, wobei man den Caprolactam und dessen Oligomere enthaltenden wässrigen Lösungen vor der ersten Eindampfungsstufe die 1 bis 5fache Menge Caprolactam, bezogen auf die Menge an Oligomeren zugibt.

Das neue Verfahren hat den Vorteil, dass keine Ausscheidungen von Oligomeren eintreten und somit Verstopfungen der Vorrichtungen vermieden werden. Ferner hat das neue Verfahren den Vorteil, dass man bereits in der ersten Aufkonzentrierungsstufe höhere Feststoffgehalte erzielt und somit insgesamt ein höherer Durchsatz in der gesamten Verdampferanlage erreicht wird.

Das neue Verfahren ist insofern bemerkenswert als der Zusatz von Caprolactam entsprechend der in der DE-AS 2 501 348 beschriebenen Arbeitsweise das Ausfallen von Oligomeren und die damit verbundenen Verstopfungen nicht zu verhindern vermochte. Deshalb war davon auszugehen, dass ein Zusatz von Caprolactam, für die Lösung der gestellten technischen Aufgabe ungeeignet ist.

In der Regel geht man von 2 bis 15 Gew.-% Caprolactam und dessen Oligomere enthaltenden wässrigen Lösungen aus. Der Gehalt an Oligomeren beträgt im allgemeinen 15 bis 25 Gew.-%, bezogen auf den Feststoffgehalt der verwendeten wässrigen Lösungen. Die darin enthaltenden Oligomeren haben in der Regel einen Polymerisationsgrad n von 2 bis 7, insbesondere handelt es sich um Dimere und Trimere. Geeignete Lösungen erhält man durch Extraktion von Polycaprolactam mit Wasser bei erhöhter Temperatur. Ein geeignetes Verfahren wird beispielsweise beschrieben in DE-PS 2 242 641.

Ein wesentliches Merkmal der Erfindung ist es, dass man der Caprolactam und dessen Oligomere enthaltenden wässrigen Ausgangslösung die 1 bis 5fache Menge Caprolactam, bezogen auf die Menge an Oligomeren, zusetzt.

Die so mit Caprolactam angereicherte wässrige Lösung wird vorteilhaft in einem ersten Schritt zum Abdestillieren des Wassers bis zu einer Konzentration von 70 bis 88%, vorzugsweise von 80 bis 85% aufkonzentriert. Dabei werden Temperaturen von 120°C, vorzugsweise 115°C in der eingedampften Lösung höchstens kurzzeitig überschritten. Die Temperatur des Heizmittels beträgt 125 bis 145°C. Vorzugsweise wird dieses Aufkonzentrieren kontinuierlich, z.B. in Robertverdampfern, Fallfilmverdampfern, Dünnschichtverdampfern oder anderen Verdampfervorrichtungen durchgeführt. Besonders bevorzugt wird die Aufkonzentrierung in einer mehrstufigen Verdampferanlage ausgeführt. Hierbei ist es unter Umständen günstig, in einzelnen Stufen die Verdampfung unter Unter- oder Überdruck durchzuführen. Das so erhaltene Konzentrat mit einem Feststoffgehalt von 70 bis 88% wird in einem zweiten Schritt kontinuierlich weiter auf einen Feststoffgehalt von grösser 95% eingedampft, wobei Temperaturen von 130 bis 210, vorzugsweise 140 bis 170°C (Die Temperatur des Heizmittels beträgt höchstens 210°C.) angewandt werden. Die Verweilzeiten im zweiten Verdampferschritt betragen vorzugsweise nicht mehr als 30 Minuten, insbesondere nicht mehr als 10 Minuten. Besonders bewährt haben sich für den zweiten Konzentrierungsschritt Dünnschichtverdampfer oder Fallfilmverdampfer.

Das aus dem zweiten Aufkonzentrierungsschritt erhaltene Produkt kann ohne weitere Reinigung oder Auftrennung allein oder gemeinsam mit anderen Polyamid bildenden Ausgangsstoffen für die Herstellung von Polycaprolactam verwendet werden. Das Verfahren nach der Erfindung sei in folgenden Beispielen veranschaulicht.

*Beispiel*

In einem Fallfilmverdampfer (Rohrdurchmesser 38 mm) werden 5 m³/Std. einer 10%igen wässrigen Lösung von Caprolactam und Oligomeren des Caprolactams (8% Caprolactam und 2% Oligomere des Caprolactams), zu der vor der Einführung in den Verdampfer 500 kg/Std. Caprolactam zugegeben werden, bei einer Heiztemperatur von ca. 140°C auf 85 bis 88%ige wässrige Lösung (1 100 bis 1 200 kg/Std.) von Caprolactam und Oligomeren des Caprolactams nach weiterer Eindampfung auf 95% aufkonzentriert und einer Polymerisationseinrichtung für Caprolactam zugeführt. Der abgegebene Dampf wird über eine Kolonne geleitet und kondensiert.

Die gesamte Vorrichtung besteht aus nicht rostenden Stahl.

Bei dieser Betriebsweise bleiben in dem zur Eindampfung auf 85 bis 88% verwendete Fallfilmverdampfer sowie in den übrigen Verdampfern im 3jährigen Betrieb alle Rohre frei und ohne Belag.

*Vergleichsbeispiel A*

In einem Fallfilmverdampfer (Rohrdurchmesser 38 mm) werden 5 m³/Std. einer 10%igen wässrigen Lösung von Caprolactam und Oligomeren des Caprolactams (8% Caprolactam und 2% Oligomere des Caprolactams) bei einer Heiztemperatur von 130° auf 50 bis 55% eingedampft. Durch den Fallfilmverdampfer wird ein Strom von 25 m³/Std. der eingedampften Lösung umgewälzt. Aus diesem Umwälzkreis wird die 50 bis 55%ige wässrige Lösung (900 bis 1000 kg/Std.) von Caprolactam und Oligomeren des Caprolactams entnommen 500 kg/Std. Caprolactam zugegeben und diese Mischung nach weiterer Eindampfung einer Polymerisationseinrichtung für Caprolactam zugeführt.

Bei dieser Betriebsweise sind in dem zur Eindampfung auf 50 bis 55% verwendeten Fallfilmverdampfer sowie die nachfolgenden Verdampfer nach 3 Monaten Betriebszeit über 80% aller Rohre verstopft und die Verdampferleistung entsprechend abgefallen.

*Vergleichsbeispiel B*

In einem Fallfilmverdampfer (Rohrdurchmesser 38 mm) werden 5 m³/Std. einer 10%igen Lösung von Caprolactam und Oligomeren des Caprolactams (8% Caprolactam und 2% Oligomere des Caprolactams) bei einer Heiztemperatur von 135° auf 70 bis 75% eingedampft. Durch den Fallfilmverdampfer wird ein Strom von 25 m³/Std. der eingedampften Lösung umgewälzt. Aus diesem Umwälzkreis wird die 70 bis 75%ige wässrige Lösung (650 bis 700 kg/Std.) von Caprolactam und Oligomeren des Caprolactams entnommen, 500 kg/Std. Caprolactam zugegeben und diese Mischung nach weiterer Eindampfung auf 95% einer Polymerisationseinrichtung für Caprolactam zugeführt.

Bei dieser Betriebsweise sind in dem zur Eindampfung auf 70 bis 75% verwendeten Fallfilmverdampfer sowie die nachfolgenden Verdampfer nach 2 Wochen Betriebszeit 30% aller Rohre verstopft und die Verdampferleistung entsprechend abgefallen.

**Patentanspruch**

Verfahren zum kontinuierlichen Eindampfen von Caprolactam und dessen Oligomere enthaltenden wässrigen Lösungen, die bei der Extraktion von Polycaprolactam anfallen durch mehrstufige Eindampfung unter Zusatz von Caprolactam, dadurch gekennzeichnet, dass man den Caprolactam und dessen Oligomere enthaltenden wässrigen Lösungen vor der ersten Eindampfungsstufe die 1 bis 5fache Menge Caprolactam, bezogen auf die an Oligomeren zugibt.

**Claim**

A process for continuously evaporating down an aqueous solution which contains caprolactam and its oligomers and is obtained in the extraction of polycaprolactam, by a multistage evaporation procedure, with the addition of caprolactam, wherein from 1 to 5 times the amount, based on the amount of oligomers, of caprolactam is added, before the first evaporation stage, to the aqueous solution which contains caprolactam and its oligomers.

**Revendication**

Procédé pour la concentration par évaporation en continu de solutions aqueuses, contenant de la caprolactame et les oligomères de celle-ci, qui sont obtenues lors de l'extraction de la polycaprolactame, par une évaporation en plusieurs stades avec addition de caprolactame, caractérisé en ce que l'on ajoute aux solutions aqueuses, contenant la caprolactame et ses oligomères, avant le premier stade d'évaporation, une quantité de caprolactame correspondant à une à cinq fois la quantité d'oligomères.